# FASCICULE DE BREVET EUROPEEN

(11) **EP 0 918 336 B1**
(45) Date de publication et mention de la délivrance du brevet: **04.06.2003**
(21) Numéro de dépôt: 98402620.3
(22) Date de dépôt: 21.10.1998
(51) Int. Cl.: G11C 16/06, G11C 8/00, G06F 12/14

(54) **Mémoire non volatile programmable et effaçable électriquement comprenant une zone protégeable en lecture et/ou en écriture et système électronique l'incorporant**
Elektrisch programmier- und löschbarer nichtflüchtiger Speicher mit einem lese- und/oder schreibgeschützen Bereich einschliesslich zugehöriger elektronischer Schaltung
Electrically programmable and erasable non volatile memory with read- and/or write protection and incorporated electronical system

(30) Priorité: 24.10.1997 FR 9713359
(43) Date de publication de la demande: 26.05.1999
(73) Titulaire: STMicroelectronics S.A., 92120 Montrouge (FR)
(72) Inventeur: Mani, Christophe, 75116 Paris (FR); Chehadi, Mohamad, 75116 Paris (FR)
(74) Mandataire: Ballot, Paul

(56) Documents cités:
- EP-A- 0 287 338
- EP-A- 0 326 053

## Description

La présente invention concerne une mémoire non volatile électriquement programmable et effaçable comprenant une zone protégeable en lecture et/ou en écriture ainsi qu'un système électronique l'incorporant.

Elle se rapporte au domaine des mémoires non volatiles, électriquement programmables et effaçables, notamment du type des mémoires EEPROM (abréviation de l'expression anglo-saxonne "Electrically Erasable Read Only Memory") conçues sous la forme de circuits intégrés. Néanmoins, elle peut également se rapporter à d'autres type de mémoires, par exemple des mémoires du type "flash EPROM" qui sont effaçables par blocs de bits.

Dans la suite, le principe de l'invention sera décrit dans le cadre, plus spécifiquement, d'une protection en écriture. Il ne se limite pas cependant à ce type de protection et s'applique aussi à une protection en lecture, voire à une protection en lecture et en écriture.

En particulier, l'invention s'applique à une mémoire du type précité à accès série, utilisant un protocole de communication de type I²C couramment utilisé dans les appareils vidéo grand public (télévision, magnétoscope, etc ...).

Les mémoires non volatiles électriquement programmables et effaçables sont particulièrement répandues dans ce genre d'applications dans la mesure où elles permettent de stocker, malgré la coupure de l'alimentation de l'appareil, des informations qui sont, par nature, changeantes au cours de la durée de vie de l'appareil. Il peut s'agir, par exemple de la date, de l'heure de déclenchement, et de la durée de l'enregistrement d'une émission de télévision qui sont programmées dans un magnétoscope. Ces données sont stockées dans des registres accessibles en lecture, et également accessibles en écriture pour permettre leur modification. Toutefois, il peut être souhaitable que l'accès en écriture à ces registres puisse être verrouillé de manière logicielle et n'être déverrouillé que par une séquence de programme déterminée. (On dit alors que les registres sont protégés en écriture). On réduit ainsi les risques de modification (et donc de perte) accidentelle des données. Une telle modification peut être due à une erreur de manipulation de l'utilisateur ou à des phénomènes de perturbations électriques dans l'appareil (connus sous le nom de "corruption" des données). Dans certains cas, on pourra même souhaiter que la modification du contenu des registres protégés ne soit pas possible de façon uniquement logicielle, mais nécessite une modification de la configuration matérielle (brochage) de la mémoire.

Par ailleurs, dans la plupart des applications, la même mémoire doit également comporter des registres toujours accessibles en écriture pour y stocker des données transitoires.

Il existe donc un besoin identifié de mémoire non volatile dont une zone au moins (c'est-à-dire un groupe de registres mémoire) soit protégeable en écriture.

Les mémoires étant des composants électroniques fabriqués à l'identique et en grande série pour en réduire le coût, des moyens pour les personnaliser sont souvent prévus, de manière à offrir au concepteur d'un système ou d'un appareil électronique les incorporant la possibilité d'organiser l'espace mémoire disponible en différentes zones, de taille variable, dont certaines pourront être protégées en écriture et d'autres non.

C'est pourquoi, dans l'art antérieur, On a déjà proposé une mémoire de type EEPROM comprenant schématiquement un empilement de registres mémoires répartis en deux zones mémoire dont l'une est protégeable en écriture et l'autre pas. Les registres sont repérés par une adresse et accessibles par l'indication de cette adresse. Dans le cas le plus fréquent (et, dans la suite de cet exposé, on se référera à cette convention), le premier registre de la mémoire (schématiquement situé en bas de la pile) est repéré par une adresse de valeur nulle, et le dernier registre (schématiquement situé en haut de la pile) est repéré par une adresse dont la valeur correspond à la taille de la mémoire exprimée par le nombre total de registres qu'elle comporte. Egalement par convention, dans la suite de l'exposé et aux figures, la valeur des adresses de registre est exprimée en notation hexadécimale comme l'atteste la lettre h (en minuscule) qui suit l'adresse mémoire composée des chiffres 0 à 9 et/ou des lettres A à F.

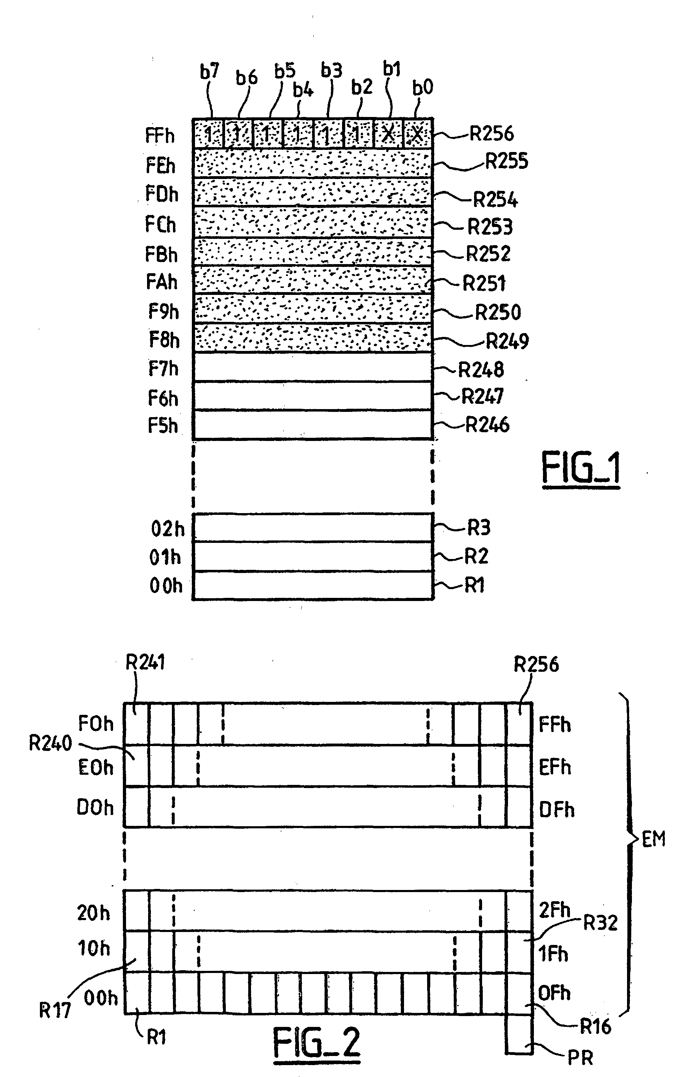

Ainsi, à la figure 1, la mémoire connue est une mémoire comprenant 256 registres R1 à R256 de huit bits chacun et disposés schématiquement en pile. La capacité de la mémoire est donc de 256 octets, soit 2048 bits (ou 2 Kbits). A la figure 1, l'adresse de chaque registre est notée sur la gauche de celui-ci.

Le dernier registre R256, situé à l'adresse FFh, est un registre particulier. En effet le mot qu'il contient a pour double fonction de déterminer la taille de la zone mémoire protégeable en écriture d'une part, et de rendre la protection en écriture effective d'autre part. En réalité, la protection d'une zone de la mémoire n'est effective qu'à une double condition. D'une part, il faut qu'une broche déterminée de la mémoire soit portée à l'état logique 1. D'autre part, il faut qu'un bit particulier d'un mot de protection contenu dans le dernier registre de la mémoire, en l'espèce le bit b2 (figure 1), soit à l'état logique 1. L'état des bits b0 et b1 du mot de protection est indifférent. Les cinq bits de poids fort b3 à b7 du mot de protection définissent les cinq bits de poids fort de l'adresse limite de la zone de la mémoire qui est protégeable en écriture, les trois bits de poids faible de l'adresse limite ayant arbitrairement la valeur logique 0. Par adresse limite, on entend dans le présent exposé l'adresse d'un registre mémoire qui constitue une limite de la zone mémoire concernée, c'est-à-dire l'adresse du premier ou du dernier registre de cette zone.

La zone mémoire comprise entre l'adresse FFh du dernier registre R256 et l'adresse limite ainsi définie est alors protégée, par exemple, en écriture. Un circuit d'écriture dans la mémoire vérifie en effet les conditions de protection de la zone mémoire, c'est à dire l'état du bit b2 du mot contenu à l'adresse FFh dans le registre R256 et l'état de la broche précitée de la mémoire, et compare la valeur des cinq bits de poids fort de l'adresse qui est spécifiée pour l'opération d'écriture d'une part, à la valeur des bits b3 à b7 du mot de protection d'autre part. Si l'adresse spécifiée est supérieure à l'adresse limite, l'opération d'écriture n'est pas effectuée. On voit qu'il est ainsi possible de protéger en écriture une zone de la mémoire dont la taille est modifiable par pas de huit registres. Dit autrement, les cinq bits de poids forts du mot de protection déterminent un bloc de registres adjacents (huit registres en l'occurrence), les registres de ce bloc et les registres supérieurs étant protégés en écriture si le bit b2 du mot de protection est à l'état logique 1. La mémoire se trouve alors partagée en deux zones, une zone inférieure qui est non protégée en écriture et une zone supérieure qui est protégée en écriture à cette condition.

La mise en oeuvre de cette protection est la suivante. Le mot contenu dans le dernier registre R256 ayant initialement tous ses bits et en particulier le bit b2 à l'état logique 0 (en sorte que toute la mémoire est non protégée en écriture), on écrit dans les registres situés en partie haute de la mémoire (sauf dans le dernier registre) les données que l'on souhaite stocker de manière protégée en écriture. Supposons que ceci ne nécessite pas plus de cinq registres (soit, au maximum, cinq octets à stocker). On a donc besoin de réserver une zone de mémoire protégée en écriture comprenant au moins cinq registres (plus le registre de protection, ce qui fait six au total). On écrit alors dans le dernier registre R256 le mot binaire 111111xxb où la lettre terminale b (en minuscule) signifie que la valeur du mot est exprimée en notation binaire, et où le signe x signifie que la valeur du bit concerné (en l'espèce les bits b0 et b1) est indifférente. Le bloc des huit derniers registres R249 à R256 de la mémoire, dont les adresses présentent la même valeur pour les bits de poids fort et qui forment la zone supérieure de la mémoire sont alors protégés en écriture. Sur la figure 1, ces registres sont représentés en teinte grisée. Les autres registres, qui forment la zone inférieure de la mémoire, sont quant à eux non protégés en écriture.

Le principe connu de protection d'une zone d'une mémoire tel que présenté ci-dessus a été décrit en référence à une mémoire ayant une capacité de 2 Kbits adressable par mots de huit bits, mais il se généralise facilement à des mémoires de capacité différente et/ou organisées différemment..

On notera cependant que, dans tous les cas, la zone de mémoire qui est protégeable au gré de l'utilisateur est de taille variable déterminée par programmation mais est forcément située en partie haute de la mémoire. Ceci est une conséquence du fait que le registre particulier réservé pour recevoir le mot de protection soit le dernier registre de la mémoire, les premiers registres de la mémoire étant dans la pratique souvent réservés pour le stockage des données nécessaires à l'initialisation du système l'incorporant (et étant parfois à ce titre eux-mêmes protégés en écriture, de manière non modifiable par programmation), et le reste des registres étant entièrement laissé à la disposition de l'utilisateur (qui est le concepteur d'un système ou d'un appareil électronique incorporant la mémoire). Avantageusement, cette zone mémoire laissée à la disposition de l'utilisateur, c'est-à-dire non protégeable en écriture, se présente comme un bloc de registres adjacents (dont les adresses sont consécutives), ce qui en simplifie la gestion par programmation.

Selon un autre avantage de cette technique, la définition de la zone protégée, quant à sa taille, se fait en spécifiant une unique adresse limite, l'autre adresse limite étant forcément celle du dernier registre. Cela offre l'avantage de la simplicité de la vérification de la protection qui est. faite préalablement à toute opération d'écriture dans la mémoire.

En outre, définir la zone protégée comme étant en partie haute de la mémoire entre l'adresse limite et l'adresse du dernier registre R256 (y compris celles-ci) implique alors que le registre R256 dans lequel le mot de protection est stocké fait lui-même partie de la zone protégée. Dès lors, sauf à modifier la valeur logique présente sur la broche précitée de la mémoire, la taille de la zone protégée ne peut plus être modifiée et la protection elle même ne peut plus être désactivée puisqu'elles sont déterminées par la valeur du mot binaire stocké dans le dernier registre R256 et que celle-ci ne peut plus être modifiée.

On voit que cette manière de définir la zone protégée présente un certain nombre d'avantages. Néanmoins, elle présente également un inconvénient. En effet, si le programme qui pilote un système incorporant la mémoire doit définir une zone de mémoire protégée d'une taille déterminée, il est nécessaire que le programme connaisse la capacité de la mémoire pour pouvoir en déduire l'adresse limite dont les bits de poids fort constitueront les bits de poids fort du mot de programmation. Dit autrement, l'adresse limite qu'il convient de considérer pour définir une zone de mémoire de taille déterminée protégeable en écriture est une adresse relative. Elle dépend de l'adresse du dernier registre de la mémoire. Et celle-ci dépend de la taille de la mémoire, c'est à dire de la capacité. Or le logiciel qui pilote le système et qui, à ce titre, gère les différentes ressources et en particulier coordonne les opérations de lecture et d'écriture en mémoire, ne connait pas forcément la taille de la (ou des) mémoire(s) que comporte le système. En effet, il arrive souvent qu'un même système électronique soit dérivé en plusieurs versions, une version de base nécessitant une faible capacité mémoire, et des versions plus sophistiquées nécessitant des capacités de mémoire plus importantes. Ces différentes versions du système électronique comportent donc des mémoires appartenant en général à une même famille de composants (de sorte que leurs modes de connexion et leur mode d'adressage sont identiques), mais ayant des capacités différentes.

On a déjà proposé des procédures de reconnaissance de la capacité des mémoires présentes dans le système, qui sont lancées à chaque mise en route du système. L'adressage de l'espace mémoire demeure un adressage relatif mais le concepteur du système n'est plus obligé de tenir compte de la capacité des mémoires utilisées pour le mettre en oeuvre. Cependant, ces procédures sont complexes et nécessitent un temps de traitement important. En outre, elles requièrent elles-même la sauvegarde d'un programme d'initialisation qui accroît le besoin en espace mémoire du système.

La présente invention vise à pallier les inconvénients de l'état antérieur de la technique, sans pour autant nécessairement et définitivement renoncer aux avantages précités de celle-ci. Notamment, elle vise à offrir au concepteur d'un système ou d'un appareil électronique qui utilise une (ou des) mémoire(s) non volatile(s) électriquement programmable(s) et effaçable(s), la possibilité de réserver une zone de l'espace mémoire protégeable en écriture qui soit définie quant à sa taille par une adresse absolue, c'est à dire qu'une adresse limite de cette zone et la taille de cette zone soient liées par une relation univoque, notamment indépendante de la capacité de la mémoire.

A cet effet, elle propose une telle mémoire, qui comporte des registres mémoire adressables individuellement ou par bloc, et qui comporte également un registre de protection dans lequel un mot de protection peut être écrit pour définir la taille et surtout la localisation, en partie haute ou basse de la mémoire, d'une zone mémoire qui peut être protégée en écriture.

Ainsi, l'utilisateur peut, au choix, définir la zone protégeable en écriture comme étant la zone inférieure ou la zone supérieure de la mémoire. Ce choix -résulte de la programmation du registre de protection.

Lorsque la zone protégeable en écriture est la zone inférieure de la mémoire, définie entre l'adresse du premier registre (qui est l'adresse nulle) d'une part, et l'adresse limite d'autre part, la taille de la zone mémoire protégeable est directement la valeur de l'adresse limite. Définir l'adresse limite à partir- de d'une valeur de la taille de la zone mémoire qu'il convient de protéger en écriture est donc une opération d'adressage absolu. L'adresse limite qui compose le mot de protection est alors indépendante de la capacité de la mémoire.

Mais lorsque les contraintes de développement du système incorporant la mémoire imposent de maintenir les premiers registres de la mémoire accessibles en écriture ou de les réserver pour le stockage d'autres types de données, l'utilisateur pourra choisir de définir la zone protégeable en écriture comme étant la zone supérieure de la mémoire. L'adressage sera alors un adressage relatif et la mémoire sera identique à une mémoire de l'art antérieur.

L'avantage de l'invention réside donc dans la possibilité laissée à l'utilisateur de choisir la partie haute ou basse de la mémoire où est définie la zone protégeable. Notamment, si un système incorpore plusieurs mémoires identiques conformes à l'invention, une zone protégeable en écriture pourra être définie pour certaines en partie haute de la mémoire alors que pour d'autres, et indépendamment, elle pourra être définie en partie basse de la mémoire.

D'autres caractéristiques et avantages de la présente invention apparaîtront encore à la lecture de la description qui va suivre. Celle-ci est purement illustrative et doit être lue en regard des dessins annexés sur lesquels on a représenté:
- à la figure 1 déjà analysée: un schéma d'organisation de l'espace mémoire d'une mémoire selon l'art antérieur;
- à la figure 2: un schéma d'organisation de l'espace mémoire d'une mémoire selon l'invention;
- à la figure 3: un exemple de système électronique incorporant des mémoires;
- à la figure 4: le schéma des connexions d'un boîtier mémoire selon l'invention, utilisant un protocole de communication I²C;
- aux figures 5a et 5b: des chronogrammes montrant une séquence d'écriture dans une mémoire, utilisant un protocole de communication I²C;
- à la figure 6: une représentation des bits du registre de protection;
- aux figures 7a à 7c des représentations schématiques de la mémoire organisée par bloc de registres, dans trois configurations possibles;
- à la figure 8: un schéma de l'organisation interne de la mémoire selon l'invention.

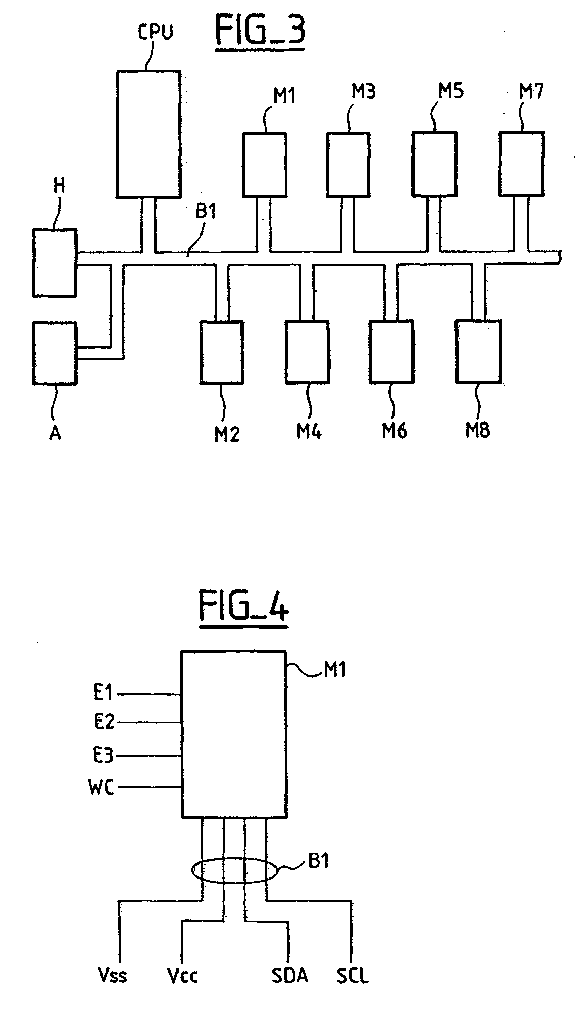

A la figure 2, on a représenté schématiquement l'organisation de l'espace mémoire d'une mémoire selon l'invention. Il s'agit d'une mémoire de deux kilobits (2 Kbits) organisée en registres de huit bits. Elle comporte donc 256 registres R1 à R256. Ces 256 registres sont organisés selon une matrice EM comportant seize lignes et seize colonnes. Par convention, la première ligne est la ligne du bas à la figure 2, et la première colonne est la colonne de gauche. Le premier registre R1 se trouve ainsi en bas à gauche de la matrice EM. Le seizième registre R16 est représenté en bas à droite de la matrice EM. Le dix-septième registre R17 est représenté au-dessus du registre R1. Le registre R241 est représenté en haut à gauche de la matrice EM. Enfin, le dernier registre R256 est représenté en haut à droite de la matrice EM.

Chaque registre est repéré par une adresse exprimée en notation hexadécimale. A la figure 2, on a représenté à gauche de la matrice EM les adresses des registres de la première colonne, R1, R17, ..., R241. On a également noté à droite de la matrice EM les adresses des registres de la dernière colonne, R16, R32 ..., R256. Les registres sont accessibles en écriture comme en lecture par la fourniture de leur adresse.

Les cellules mémoires sont par exemple des cellules du type EEPROM mais peuvent être d'un autre type, par exemple des cellules Flash EPROM.

L'espace mémoire de la mémoire de la figure 2 comporte aussi, selon l'invention, un registre de protection PR schématiquement représenté en-dessous du registre R16 de la matrice EM. Préférentiellement, ce registre de protection est physiquement distinct des registres mémoires de la matrice EM. Il est accessible selon un mode particulier, dont un exemple sera fourni ci-après. Ceci présente l'avantage que, pour l'utilisateur de la mémoire, c'est-à-dire le concepteur d'un système électronique l'incorporant, l'espace mémoire disponible pour son application comprend les 256 registres R1 à R256 dans leur ensemble. La gestion de l'espace mémoire disponible s'en trouve facilitée puisque, par rapport à la mémoire selon l'art antérieur décrite en référence à la figure 1, aucun registre de l'espace mémoire proprement dit ne doit être traité de façon particulière comme étant le registre de protection. Il en résulte une plus grande facilité d'utilisation de la mémoire, qui se traduit par une documentation technique beaucoup plus dépouillée et facile à interpréter par l'utilisateur.

Préférentiellement, mais non nécessairement, le registre de protection sera constitué de cellules mémoire du même type que les cellules des registres mémoire. Le procédé de fabrication du circuit intégré est alors unique. La fabrication de la mémoire est donc plus rapide et moins couteuse.

A la figure 3 on a représenté schématiquement un exemple de réalisation d'un système électronique incorporant une ou plusieurs mémoires selon l'invention. Dans l'exemple, ce système comprend huit mémoires M1 à M8, qui sont connectées par l'intermédiaire d'un bus B1 à une unité de traitement CPU comme un microprocesseur. Une horloge H et un circuit d'alimentation A sont également connectés au bus B1. D'autres composants non représentés peuvent encore être connectés audit bus selon les besoins de l'application. Il pourra s'agir par exemple de circuits, dits circuits périphériques, gérés par le microprocesseur CPU, ou de circuits d'interface avec des organes extérieur contrôlés par le microprocesseur.

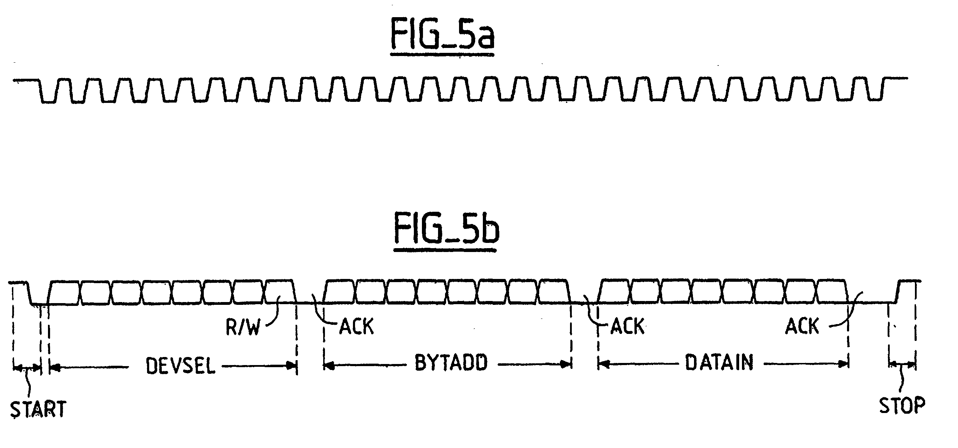

A la figure 4, on a représenté un boîtier d'une mémoire M1 selon l'invention. Ainsi qu'on l'a dit plus haut, il s'agit préférentiellement mais non nécessairement d'une mémoire EEPROM. Il pourrait également s'agir d'une mémoire dite Flash EPROM.

La mémoire décrite est une mémoire destinée à communiquer avec les autres composants du système selon un protocole de communication conforme à la norme I²C. Elle est donc adaptée pour être utilisée dans des systèmes multipléxés utilisant un bus I²C. Bien entendu, l'invention ne se limite pas à des mémoires utilisant un tel protocole. Elle s'applique indistinctement à des mémoires utilisant un autre protocole de communication, ainsi qu'à des mémoires dites parallèles n'utilisant pas de protocole particulier. Les bus I²C sont utilisés notamment pour la réalisation de systèmes électroniques pour des produits grand public, notamment vidéo (télévisions, magnétoscopes, ...) ou pour l'automobile (autoradios, équipements d'ABS ou de déclenchement de coussins gonflables de sécurité (airbag) ...). Comme autre exemple d'utilisation des bus I²C, on peut citer également les systèmes utilisant les lecteurs de cartes à microprocesseur (cartes à puce).

Un tel bus I²C comprend deux lignes:
- une ligne SDA pour la transmission bidirectionnelle en série de signaux de commande, d'adresses, et de données;
- et une ligne SCL pour la transmission d'un signal d'horloge généré par le circuit d'horloge H de la figure 3.

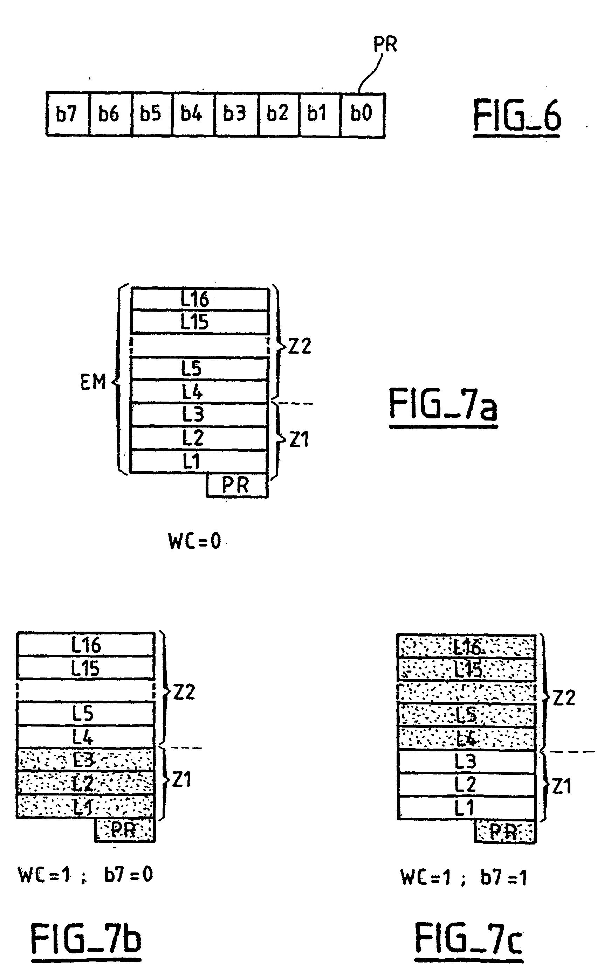

Le boîtier de la mémoire M1 représenté à la figure 4 comporte donc quatre broches ou bornes d'entrée destinées à être connectées au bus B1 de type I²C de la figure 3 afin de recevoir les signaux SDA, SCL, Vss et Vcc. Il comporte également trois bornes d'entrée E1, E2, E3, destinées à être portées à une tension continue de valeur constante égale à 5 volts ou à la masse. Le niveau des tensions appliquées sur les entrées E1, E2, E3 sont utilisées pour différencier une pluralité de boîtiers mémoires connectés à un même bus. C'est en l'occurrence huit mémoires identiques qu'il est possible de connecter sur le bus B1, ainsi qu'il est représenté dans l'exemple de système de la figure 3. Enfin, le boîtier de la mémoire M1 de la figure 4 comporte une borne d'entrée WC, dite entrée de protection, dont le rôle et l'utilisation seront explicités ci-dessous en regard des figures 7a à 7c.

Aux figures 5a et 5b, on peut voir une séquence de signaux transmis par l'intermédiaire du bus I²C pour un accès à la mémoire M1. En l'occurrence, il s'agit d'un accès direct à un unique registre de la mémoire. Cet accès direct nécessite l'indication de l'adresse du registre concerne. On observera, sans plus de commentaires, que d'autres modes d'accès à la mémoire sont possibles. Il s'agit par exemple d'un mode séquentiel et d'un mode d'accès "par page". On pourra se référer à la littérature technique concernant les bus de type I²C pour plus de précisions sur ces autres modes d'accès à la mémoire. A la figure 5a, on a représenté l'évolution au cours du temps du signal d'horloge transmis par l'intermédiaire de la ligne SCL. A la figure 5b, on a représenté l'évolution au cours du temps du signal transmis sur la ligne SDA du bus. La séquence d'accès débute par une condition de début de transmission. Cette condition, référencée START aux figures, est réalisée lorsqu'un front descendant se produit sur la ligne SDA alors que la ligne SCL est à l'état logique 1. Ensuite, à chaque impulsion du-signal d'horloge sur la ligne SCL correspond un bit d'information transmis en série sur la ligne SDA. On notera que la valeur des bits transmis sur la ligne SDA change (le cas échéant) lorsque la ligne SCL est à l'état logique 0. La séquence se poursuit par la transmission sur huit bits d'un mot DEVSEL de sélection de boîtier. Les quatre bits de poids fort de ce mot correspondent à un. code d'identification du composant connecté sur le bus qui est concerné par la séquence. Par exemple, pour les mémoires, ce code d'identification correspond, selon la norme I²C, à la valeur 1010b. Les trois bits suivants correspondent au code de sélection de boîtier parmi les différents boîtiers de même type connectés au bus. La valeur de ces trois bits est à rapprocher du niveau des tensions portées sur les entrées E1, E2, E3 de chaque mémoire, pour déterminer laquelle des huit mémoires M1 à M8 est concernée par la séquence d'accès. Enfin, le dernier bit R/W du mot de sélection DEVSEL a pour fonction de distinguer entre un accès en écriture et un accès en lecture. Pour un accès en écriture, ce bit est à la valeur 0 (R/W = 0). Pour un accès en lecture, il est à la valeur 1 (R/W = 1). Après la réception du code de sélection de boîtier, le boîtier concerné émet un bit ACK d'accusé de réception sur la ligne SDA. Il s'agit d'un bit ayant la valeur logique 0. Le microprocesseur CPU émet alors sur le bus un mot de huit bits BYTADD correspondant à l'adresse du registre mémoire concerné par la séquence d'accès. A la réception de ce mot, la mémoire émet à nouveau un bit ACK. Pour un accès en écriture (R/W = 0), le microprocesseur CPU émet alors sur le bus un mot de données DATAIN sur huit bits correspondant à la donnée à écrire, dont la réception par le boîtier mémoire est confirmée par l'émission d'un nouveau bit ACK par cette dernière. Pour un accès en lecture (R/W = 1) le mot de données DATAIN est placé sur le bus par la mémoire et c'est le microprocesseur CPU qui émet un bit ACK à la réception de ce mot. La séquence d'accès se termine enfin par une condition de fin de transmission. Cette condition, référencée STOP aux figures, est réalisée lorsqu'un front montant se produit sur la ligne SDA alors que la ligne SCL est à l'état logique 1.

La séquence d'accès à la mémoire selon le protocole I²C décrite ci-dessus pour un accès en mode normal est adaptée selon l'invention de manière à pouvoir accéder au registre de protection PR de chaque boîtier mémoire, ainsi qu'il va maintenant être décrit. On a vu que les quatre bits de poids fort du mot DEVSEL de sélection de boîtier présentent une valeur particulière, à savoir la valeur 1010b, lorsque l'accès concerne une mémoire. Cette valeur est déterminée par la norme I²C elle-même. Selon une disposition originale de l'invention, on accède au registre de protection PR d'un boîtier mémoire déterminé, en donnant aux quatre bits de poids fort du mot de sélection DEVSEL une valeur déterminée différente de celle ci-dessus, qui est propre à être interprétée par la mémoire comme signifiant que la séquence d'accès concerne le registre de protection PR. Cette valeur est par exemple la valeur 0110b. Dès lors, le mot d'adresse BYTADD transmis après le mot de sélection de boîtier DEVSEL sur le bus I²C est indifférent pour cette séquence d'accès.

Ainsi, tout se passe comme si le registre de protection PR était en fait compris dans un boîtier indépendant connecté au bus, et distingué des boîtiers similaires par le niveau des tensions présent sur ces trois entrées E1, E2, E3.

La procédure d'accès au registre de protection PR donnée ci-dessus n'est qu'un exemple donné ici dans le cas d'une mémoire communicant par l'intermédiaire d'un protocole conforme à la norme I²C. Il est bien évident que le principe de définition d'une zone protégeable en écriture dans une mémoire selon les caractéristiques de l'invention est applicable à d'autres types de mémoire, en sorte que d'autres types d'accès au registre de protection PR sont naturellement envisageables sans dénaturer le principe de l'invention. Le registre de protection peut par exemple être accessible par la fourniture d'une adresse de valeur particulière, ce qui serait par exemple le cas si le registre de protection était en fait un registre mémoire particulier. On va maintenant décrire le principe de définition des zones de la mémoire selon l'invention.

A la figure 6 on a représenté le détail du registre de protection PR. Dans l'exemple préféré, il s'agit d'un registre huit bits. Mais il est bien entendu qu'il pourra s'agir d'un registre de taille différente, notamment plus grande si la mémoire a une capacité plus importante nécessitant un adressage par un nombre de bits supérieur à sept.

Le registre de protection PR est destiné à stocker un mot de protection sur huit bits. Ce mot de protection a une double fonction. D'une part certains de ses bits ont pour fonction de définir l'adresse d'un registre mémoire particulier ou d'un groupe de registres mémoires particulier, qui partage l'espace mémoire en une zone inférieure et une zone supérieure. La zone inférieure sera la zone repérée entre l'adresse 00h du premier registre et cette adresse limite, alors que la zone supérieure sera la zone comprise entre ladite adresse limite (celle-ci y comprise) et l'adresse FFh du dernier registre R256. Un bit particulier du mot de protection stocké dans le registre PR, dit bit de zone, a également pour fonction de déterminer celle des deux zones supérieure ou inférieure qui est protégeable en écriture. Le bit de zone est par exemple le bit de poids fort B7 du mot de protection. Avec un mot de protection sur huit bits, c'est donc les sept bits B0 à B6 du mot de protection qui sont disponibles pour coder l'adresse limite. Dans l'exemple de réalisation de l'invention proposé, les registres mémoires R1 à R256 sont au nombre de 256, en sorte que les sept bits de poids faible B0 à B6 du mot de protection (de huit bits) ne sont pas suffisants pour déterminer l'adresse complète d'un registre mémoire particulier. En fait, seuls les quatre bits de poids faible B0 à B3 sont utilisés pour coder l'adresse d'un bloc de registres. Par l'expression "bloc de registres", on désigne un groupe de registres dont les adresses sont consécutives (on peut parler de registres adjacents) et présentent donc des bits de poids fort de valeurs identiques. Ainsi, la mémoire étant physiquement organisée en lignes de seize registres chacune, ainsi qu'il a été décrit en regard de la figure 2, les quatre bits de poids faible B0 à B3 du mot de protection permettent de définir l'adresse commune des registres d'un bloc comprenant les registres d'une même ligne physique. Ainsi, on considérera dans la suite que, selon un exemple de réalisation préféré de l'invention, un bloc de registres se confond avec une ligne physique de registres telle que disposée sur le silicium de la mémoire. Dans la suite, on utilise également l'expression "page physique de la mémoire" pour désigner un tel bloc, dans la mesure où il s'agit effectivement de la page physique telle qu'elle se présente sur le silicium. On sait que la page physique se définit comme le motif élémentaire du plan mémoire qui est reproduit un nombre déterminé de fois de manière à constituer une mémoire de capacité déterminée. cela signifie que la capacité de la mémoire s'exprime comme un multiple du nombre de cellules (ou bits) correspondant à une page physique de la mémoire. Dans l'exemple, ce nombre est égal à 128, puisque chaque ligne du plan mémoire correspond à seize registres de huit bits, c'est-à-dire 128 cellules mémoires.

Selon un avantage de l'invention, l'adresse limite définissant la zone supérieure et la zone inférieure de la mémoire est l'adresse d'un tel bloc de registres. Ainsi, la taille de la zone protégeable est également un multiple du nombre de cellules correspondant à une page physique. En particulier, cela signifie que la plus petite taille possible pour la zone protégeable en écriture est celle correspondant à une page physique. Ceci est particulièrement avantageux dans la mesure où la mémoire comporte classiquement des moyens de sélection de toutes les cellules d'une même page physique pour permettre l'accès simultané à toutes les cellules (mode d'accès dit "mode page"). Sur les figures 7a, 7b et 7c, on peut voir trois représentations schématiques de l'espace mémoire EM ainsi que du registre de protection PR sur lesquelles l'espace mémoire est représenté par une colonne unique de seize lignes, correspondant à autant de pages physiques de la mémoire. Les lignes sont référencées L1 à L16. Le registre de protection PR est représenté au-dessous de la première ligne L1. Comme on l'a vu, le mot de protection enregistré dans le registre de protection a pour double fonction de déterminer la taille et la localisation d'une zone mémoire qui est protégeable, c'est à dire qui peut être protégée ou non. En fait, cette zone est effectivement protégée (ici en écriture, mais une protection en lecture et/ou écriture est également envisageable sans dénaturer le principe de l'invention) ou non selon le niveau de tension présent sur la borne d'entrée de protection WC du boîtier de la mémoire (figure 4). Cette entrée a donc pour fonction de valider ou non la protection de la mémoire. On notera qu'elle peut recevoir un signal logique dont l'état est déterminé par le système électronique (par programmation ou par une logique dite "câblée") mais peut aussi être connectée à la source d'alimentation positive ou à la masse (connexion matérielle à la tension + 5 volts ou à la masse).

A la figure 7a, on a représenté la mémoire lorsque cette borne d'entrée est reliée à la masse (WC = 0). La protection de la mémoire n'est pas valide en sorte que l'ensemble des registres mémoires sont alors accessibles en écriture, ce qui signifie que la mémoire n'est pas protégée en écriture, et ce, quelle que soit la valeur du mot contenu dans le registre de protection. Egalement, le registre de protection n'est pas protégée en écriture.

Aux figures 7b et 7c, à l'inverse, l'entrée de protection WC est connectée à la tension d'alimentation positive, en sorte qu'elle se trouve à un niveau correspondant à un état logique 1 (WC = 1). la protection de la mémoire est alors valide. Cela implique que la zone de la mémoire qui est protégeable se trouve effectivement protégée. Egalement, le registre de protection est protégé en écriture. On notera donc que le registre de protection RP est protégé en écriture en même temps et aux mêmes conditions que la zone mémoire protégeable en lecture et/ou en écriture. Cette disposition se justifie par le fait que le mot de protection qu'il contient détermine la taille et la localisation de ladite zone. S'il n'était pas protégé en écriture en même temps que cette zone, alors il serait aisé d'en modifier le contenu et de priver ainsi la protection de la mémoire de tout effet réel.

L'état de la mémoire représenté à la figure 7b se distingue de celui représenté à la figure 7c par la valeur du bit de zone B7 du mot de protection stocké dans le registre de protection PR.

A la figure 7b, ce bit est à l'état logique 0 (B7 = 0). La zone de la mémoire qui est protégée est alors la zone inférieure, référencée Z1 qui comprend par exemple les registres des lignes L1 à L3. Cette zone est représentée en teinte grisée. La zone supérieure, référencée Z2, n'est pas protégée en écriture. On peut donc accéder aux registres mémoire compris dans cette zone pour y écrire des données.

A la figure 7c, on a représenté schématiquement l'état de la mémoire lorsque le bit de zone du mot de protection est à l'état logique 1 (B7 = 1). C'est alors la zone supérieure Z2 qui est protégé en écriture, la zone inférieure Z1 étant accessible en écriture.

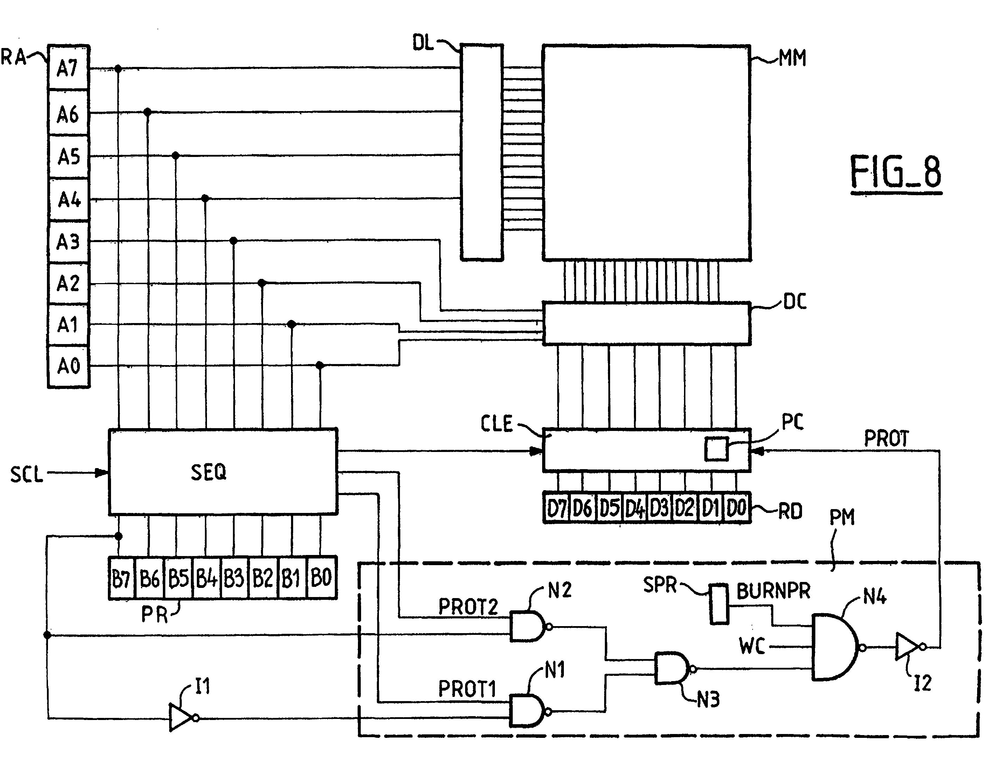

Le registre de protection PR est, quant à lui, protégé en écriture quel que soit l'état du bit b7 du mot de protection, dès que la borne d'entrée de protection WC est à l'état logique 1 (WC = 1), ainsi qu'on l'a dit plus haut. Dans certaines applications, cette borne WC du boîtier mémoire reçoit un signal logique transmis par des connexions internes au système électronique. Mais dans l'exemple d'utilisation préférentiel envisagé, la mémoire communiquant vers l'extérieur par l'intermédiaire d'un bus de type I²C, sans autre connexions logiques, la borne WC est préférentiellement en permanence connectée à la source d'alimentation positive par une liaison directe, en sorte que la protection de la mémoire est toujours active. On notera que, même lorsque la borne d'entrée de protection WC de la mémoire est ainsi porté en permanence à l'état logique 1, il est possible de rendre la totalité de l'espace mémoire accessible en écriture. Il suffit d'écrire le mot 00000000b dans le registre de protection PR. Toutefois, un problème particulier se pose lors de la première utilisation de la mémoire, pour accéder au moins une fois au contenu du registre PR de manière à y stocker un mot de protection qui va définir la taille et la localisation de la zone protégée. Ce problème est résolu selon l'invention en ce que la mémoire comporte des moyens d'inhibition de la protection lorsque le registre de protection est vierge. Grâce à ces moyens, la protection n'est active que lorsqu'un mot de protection a été écrit dans le registre de protection. En effet, lors de la livraison du boîtier mémoire à l'utilisateur, le registre de protection est vierge, comme n'ayant jamais été programmé et contient la valeur 00000000b. L'utilisateur doit pouvoir écrire, au moins une fois, le mot de protection de son choix pour personnaliser la mémoire, c'est à dire l'adapter aux besoins spécifiques de son application. Les moyens précités ont donc pour fonction d'inhiber la protection en écriture du registre de protection PR malgré le fait que la borne d'entrée de protection WC soit à l'état logique 1. Ces moyens vont maintenant être décrits en regard de la figure 8.

L'organisation interne de la mémoire selon l'invention est représentée schématiquement à là figure 8. Le plan mémoire MM est connecté à un registre d'adresses RA par l'intermédiaire d'une part d'un décodeur de lignes DL et d'autre part d'un décodeur de colonnes DC. Les quatre bits de poids faible A0, A1, A2, A3 du registre de d'adresses RA sont transmis au décodeur de colonnes DC. De même les quatre bits de poids fort A4, A5, A6, A7 du registre d'adresses RA sont transmis en entrée du décodeur de lignes DL. Le fonctionnement de la mémoire lors d'une opération de lecture ou d'écriture est piloté par un séquenceur SEQ. Celui-ci est connecté aux huit bits du registre d'adresses RA. Il pourrait en fait, selon le mode de réalisation préféré de l'invention dans lequel la taille de la zone protégée n'est définie que par blocs de seize registres, n'être connecté qu'aux quatre bits de poids fort A4, A5, A6 et A7 du registre RA. Le séquenceur SEQ reçoit en outre le signal d'horloge par l'intermédiaire de la ligne SCL du bus de données auquel la mémoire est raccordée. Le décodeur de lignes DL et le décodeur de colonnes DC agissent comme des démultiplexeurs pour sélectionner les cellules ou le bloc de cellules mémoires qui est (sont) concernée(s) par l'opération de lecture ou d'écriture en cours. Ainsi, le décodeur de lignes est relié au plan mémoire par l'intermédiaire de seize lignes de mots. De même, le décodeur de colonne DC est relié au plan mémoire MM par l'intermédiaire de seize lignes qui commandent chacune un transistor de sélection, celui-ci permettant la sélection de huit cellules mémoires constituant un registre mémoire.

Un circuit CLE de lecture et d'écriture est également relié au plan mémoire par l'intermédiaire de huit lignes de bits sur lesquelles les données sont transmises du ou vers le plan mémoire MM selon que l'opération en cours est une opération respectivement de lecture ou d'écriture. Ce circuit de lecture CLE est donc connecté à un registre de données RD qui est un registre huit bits. Le circuit de lecture CLE reçoit un signal de commande venant du séquenceur SEQ pour valider l'opération.

Selon l'invention, le registre de protection PR, qui dans l'exemple est un registre huit bits, est connecté au circuit séquenceur SEQ. Le séquenceur contrôle en effet en permanence l'état des bits B0 à B7 du registre de protection. Plus précisément, ainsi qu'il a été dit plus haut, il contrôle, dans un mode de réalisation préféré, les quatre bits de poids faible B0 à B3 et le bit de poids le plus fort B7, qui définissent respectivement la taille et la localisation de la zone mémoire qui est protégée en écriture. Le circuit séquenceur SEQ comporte des moyens de comparaison des quatre bits de poids fort A4, A5, A6, A7 de l'adresse contenue dans le registre d'adresses RA, à la valeur respectivement des quatre bits B0, B1, B2, B3 du mot de protection contenu dans le registre PR. Il s'agit d'une comparaison bit à bit.

La mémoire selon l'invention comporte en outre des moyens de protection PM pour générer un signal de protection PROT qui est transmis sur une entrée du circuit de lecture/écriture CLE afin d'autoriser ou non l'opération de lecture ou d'écriture. Ces moyens comprennent une première porte NAND N1 dont une première entrée reçoit un signal PROT1 généré par le séquenceur SEQ et dont la seconde entrée reçoit le complémentaire logique du bit B7 transmis par l'intermédiaire d'un inverseur I1. Ils comprennent également une deuxième porte NAND N2 recevant sur une première entrée un signal PROT2 généré par le séquenceur SEQ et sur une seconde entrée l'état logique déterminé par le bit B7 du registre de protection PR. Le signal PROT1 est à l'état logique 1 lorsque le mot A7A6A5A4 est inférieur au mot b3b2b1b0 (A7A6A5A4 < b3b2b1b0) et à l'état logique 0 dans les autres cas. Le signal PROT2 est à l'état logique 1 lorsque le mot A7A6A5A4 est supérieur ou égal au mot b3b2b1b0 (A7A6A5A4 ≥ b3b2b1b0) et à l'état logique 0 dans les autres cas. Les sorties des portes NAND N1 et N2 sont transmises sur les deux entrées d'une troisième porte NAND N3. La sortie de cette porte N3 est transmise sur une première entrée d'une porte NAND à trois entrées N4, dont la deuxième entrée reçoit le signal présent sur l'entrée de protection WC de la mémoire, et dont la troisième entrée reçoit un signal BURNPR dont le rôle va être expliqué ci-dessous. Ce signal logique est déterminé par l'état d'une cellule SPR. Cette cellule est par exemple un point mémoire EEPROM distinct de ceux du plan mémoire MM et du registre de protection PR. La cellule SPR a pour fonction d'indiquer l'état vierge ou non du registre de protection PR. la sortie de la porte NAND N4 est transmise en entrée d'un second inverseur I2 dont la sortie délivre un signal de protection PROT. Ce signal est transmis sur une entrée adaptée du circuit CLE de lecture/écriture dans la mémoire.

Le fonctionnement des moyens de protection PM est le suivant. Lorsque la mémoire est livrée à son utilisateur, la cellule SPR est à l'état logique 0, ce qui signifie que le registre de protection PR est vierge comme n'ayant jamais été programmé. Ainsi, quel que soit l'état logique sur l'entrée de protection WC et quel que soit celui des signaux PROT1 et PROT2 et du bit b7, le signal PROT est à l'état logique O. En conséquence, le circuit CLE de lecture/écriture effectue l'opération d'écriture à réception de l'ordre transmis par le séquencement SEQ. Dit autrement, tous les registres de la mémoire sont accessibles en écriture tant que le registre de protection est vierge.

Lorsque la séquence de commande reçue par la mémoire est une séquence d'écriture dans le registre de protection PR (code d'identification du composant égal à 0110b) l'écriture dans le registre PR (lorsque celui-ci est accessible en écriture) provoque simultanément l'écriture de la valeur logique 1 dans la cellule SPR. C'est le cas notamment de la première opération d'écriture dans le registre PR. Ainsi, après cette première opération, la cellule SPR est à l'état logique 1, ce qui signifie que le registre de protection PR n'est plus vierge. Le signal BURNPR porté en entrée de la porte N4 est alors à l'état logique 1. Ainsi qu'on l'a compris, la cellule SPR permet d'inhiber la protection de la mémoire, même lorsque la borne d'entrée de protection WC est à l'état logique 1 comme étant par exemple matériellement raccordée à la source d'alimentation positive, lorsque le registre de protection PR est vierge. Cette fonction d'inhibition est assurée au sein des moyens de protection PM en combinaison avec la porte NAND à trois entrées N4. Bien sûr, des moyens équivalents sont également envisageables. Lorsque le registre de protection n'est plus vierge (SPR = 1), le signal PROT n'est à l'état logique 1 qu'à la double condition d'une part que l'entrée de protection WC soit à l'état logique 1 et d'autre part que, soit A7A6A5A4 < b3b2b1b0 et b7 =0, soit A7A6A5A4 > b3b2b1b0 et b7 = 1.

Le signal PROT transmis en entrée du circuit CLE de lecture/écriture agit par exemple au niveau de la pompe de charge dont le rôle est de générer la haute tension de programmation des cellules EEPROM du plan mémoire MM nécessaire à toute opération d'écriture. Ainsi, lorsque le signal PROT est à l'état logique 1, le fonctionnement de la pompe de charge est inhibé en sorte que l'opération d'écriture ne peut être effectuée par le circuit CLE. D'autres modes d'action du signal de protection sont envisageables somme par exemple une action au niveau du séquenceur SEQ de manière, grâce à des circuits de logique combinatoires adaptés, à empêcher l'opération d'écriture d'être réalisée.

On notera que l'écriture dans le registre -de protection PR est avantageusement réalisée par le circuit CLE et par le séquenceur SEQ. Des moyens spécifiques pour l'écriture dans ce registre, qui sont en soi à la portée de l'homme du métier, peuvent néanmoins leur être préférés.

On observera en conclusion que, grâce à l'invention, l'utilisateur à la possibilité de déterminer la zone protégeable quant à sa localisation, en partie haute ou basse de la mémoire. Notamment, un même système électronique peut incorporer au moins une mémoire selon l'invention dans laquelle une zone protégeable est déterminée en partie haute et au moins une autre mémoire pour laquelle une zone protégeable est déterminée en partie basse. Dit autrement, pour chacune de ces mémoires, la zone protégeable est déterminée quant à sa localisation en partie haute ou basse de la mémoire indépendamment de la (ou des) autre(s) mémoire(s). Cela offre donc énormément de possibilités à l'utilisateur qui peut profiter des avantages de l'une ou l'autre des localisations.

On observera en outre que la zone protégeable selon l'invention reste déterminée quant à sa taille au moyen d'une unique adresse limite qui est soit celle d'un registre particulier, soit celle d'un bloc de registres (selon la taille de l'adresse d'un registre mémoire et selon le nombre de bits disponibles dans le registre de protection pour coder cette adresse). Par ailleurs, le bloc de registres non protégés demeure un -bloc de registres adjacents

L'invention a été décrite ci-dessus dans le cadre de son -application à une mémoire comprenant 256 registres de huit bits chacun mais il est bien évident qu'elle n'est pas limitée dans son principe à des mémoires ainsi organisées. De même, l'application à une mémoire à accès série utilisant un protocole de communication conforme à la norme I²C est purement illustrative et ne limite en rien la portée de l'invention.

## Revendications

1. Mémoire non volatile électriquement programmable et effaçable, comportant des registres mémoire (R1-R256) adressables individuellement ou par bloc, **caractérisée en ce qu'**elle comporte également un registre de protection (PR) dans lequel un mot de protection peut être écrit pour définir la taille et la localisation en partie haute ou basse de la mémoire d'une zone mémoire qui est protégeable en lecture et/ou en écriture.

2. Mémoire selon la revendication 1, **caractérisée en ce que** le mot de protection comprend un nombre donné de bits (b0-b6) pour coder l'adresse d'un registre mémoire quelconque ou d'un bloc de registres mémoire, dite adresse limite, qui partage l'espace mémoire en une zone inférieure (Z1) et une zone supérieure (Z2), et un bit de zone (b7) dont la valeur détermine celle des deux dites zones-de la mémoire qui est protégeable.

3. Mémoire selon la revendication 2, **caractérisée en ce que** l'adresse limite est l'adresse d'un bloc de registres (L1,L2,L3, ... ,L16) correspondant à une page physique de la mémoire.

4. Mémoire selon l'une des revendication précédentes, **caractérisée en ce que** le registre de protection (PR) est physiquement différent des registres mémoires (R1-R256).

5. Mémoire selon l'une des revendication précédentes, **caractérisée en ce que** le registre de protection (PR) est protégé en écriture en même temps et aux mêmes conditions que la zone mémoire qui est protégeable en lecture et/ou en écriture.

6. Mémoire selon l'une des revendication précédentes, **caractérisée en ce que** la zone mémoire qui est protégeable est effectivement protégée lorsqu'une borne d'entrée déterminée de la mémoire (WC) est portée à un niveau logique 1.

7. Mémoire selon l'une des revendication précédentes, **caractérisée en ce que**, étant une mémoire à accès série utilisant un protocole de type I²C, les quatre bits de poids fort d'un mot de sélection (DEVSEL) reçu en début de séquence d'écriture ou de lecture présentent une première valeur pour l'accès au contenu des registres mémoire (R1-R256) et une seconde valeur pour l'accès au contenu du registre de protection (PR).

8. Mémoire selon l'une des revendications précédentes, **caractérisée en ce que** elle comporte des moyens de protection (PM) pour générer un signal de protection (PROT) qui comprennent des moyens d'inhibition de la protection (SPR, N4) lorsque le registre de protection est vierge.

9. Système électronique **caractérisé en ce qu'**il incorpore, au moins une mémoire selon l'une des revendications précédentes.

10. Système électronique incorporant au moins deux mémoires selon l'une des revendications précédentes, **caractérisé en ce que** pour chacune d'elles, la zone protégeable est déterminée, quant à sa localisation en partie haute ou basse de la mémoire, indépendamment des autres mémoires.

## Claims

1. Electrically programmable and erasable non-volatile memory, comprising memory registers (R1-R256) that are addressable individually or by block, **characterised in that** it also comprises a protection register (PR) to which a protection word can be written in order to define the size and location in the upper or lower part of the memory of a memory zone that is protectable in read and/or write mode.

2. Memory according to Claim 1, **characterised in that** the protection word comprises a given number of bits (b0-b6) for coding the address of any memory register or of a block of memory registers, known as a limit address, which divides the memory space into a lower zone (Z1) and an upper zone (Z2), and a zone bit (b7), the value of which determines that of said two zones of the memory, which is protectable.

3. Memory according to Claim 2, **characterised in that** the limit address is the address of a block of registers (L1, L2, L3, ..., L16) corresponding to a physical page of the memory.

4. Memory according to one of the preceding claims, **characterised in that** the protection register (PR) is physically different from the memory registers (R1-R256).

5. Memory according to one of the preceding claims, **characterised in that** the protection register (PR) is protected in write mode at the same time and under the same conditions as the memory zone, which is protectable in read and/or write mode.

6. Memory according to one of the preceding claims, **characterised in that** the memory zone, which is protectable, is actually protected when a predetermined input terminal of the memory (WC) is taken to a logic level 1.

7. Memory according to one of the preceding claims, **characterised in that**, being a serial-access memory using a type I²C protocol, the four most significant bits of a selection word (DEVSEL) received at the start of a write or read sequence have a first value for access to the content of the memory registers (R1-R256) and a second value for access to the content of the protection register (PR).

8. Memory according to one of the preceding claims, **characterised in that** it comprises protection means (PM) for generating a protection signal (PROT), which comprise means for inhibiting protection (SPR, N4) when the protection register is empty.

9. Electronic system **characterised in that** it incorporates at least one memory according to one of the preceding claims.

10. Electronic system incorporating at least two memories according to one of the preceding claims, **characterised in that**, for each of them, the protectable zone is predetermined as to its location in the upper or lower part of the memory, irrespective of the other memories.

## Patentansprüche

1. Elektrisch programmierbarer und löschbarer, nicht flüchtiger Speicher mit Speicherregistern (R1-R256), die einzeln oder blockweise adressierbar sind, **dadurch gekennzeichnet, daß** er ferner ein Schutzregister (PR) aufweist, in das ein Schutzwort geschrieben werden kann, um die Größe und den Ort einer Speicherzone, die lese- und/oder schreib-schützbar ist, in einem oberen oder unteren Teil des Speichers zu definieren.

2. Speicher nach Anspruch 1, **dadurch gekennzeichnet, daß** das Schutzwort eine gegebenen Anzahl Bits (b0-b6) zum Codieren der Adresse irgendeines Speicherregisters oder. eines Speicherregisterblockes umfaßt, die Grenzadresse genannt wird, welche den Speicherraum in eine untere Zone (Z1) und eine obere Zone (Z2) trennt, sowie ein Zonen-Bit (b2), dessen Wert die Zone der beiden Zonen des Speichers bestimmt, welche schützbar ist.

3. Speicher nach Anspruch 2, **dadurch gekennzeichnet, daß** die Grenzadresse die Adresse eines Registerblocks (L1, L2, L3, ... , L16) ist, welche einer physischen Seite des Speichers entsprechen.

4. Speicher nach einem der vorangehenden Ansprüche, **dadurch gekennzeichnet, daß** das Schutzregister (PR) sich von den Speicherregistern (R1-R256) physisch unterscheidet.

5. Speicher nach einem der vorangehenden Ansprüche, **dadurch gekennzeichnet, daß** das Schutzregister (PR) zur selben Zeit und zu den gleichen Bedingungen schreibgeschützt ist wie die Speicherzone, die lese- und/oder schreib-schützbar ist.

6. Speicher nach einem der vorangehenden Ansprüche, **dadurch gekennzeichnet, daß** die Speicherzone, die schützbar ist, effektiv geschützt ist, wenn ein bestimmter Eingangsanschluß des Speichers (WC) ein Niveau hat, daß logisch 1 entspricht.

7. Speicher nach einem der vorangehenden Ansprüche, **dadurch gekennzeichnet, daß** er ein Speicher mit seriellem Zugriff ist, der das I²C-Protokoll verwendet, wobei die vier höchstwertigen Bit eins Auswahlwortes (DEVSEL), das am Anfang der Schreib- oder Lesesequenz empfangen wird, einen ersten Wert für den Zugriff auf den Inhalt der Speicherregister (R1-R256) und einen zweiten Wert für den Zugriff auf den Inhalt des Schutzregisters (PR) darstellen.

8. Speicher nach einem der vorangehenden Ansprüche, **dadurch gekennzeichnet, daß** er Schutzmittel (PM) zum Erzeugen eines Schutzsignals (PROT) aufweist, welche Sperrmittel aufweisen, um einen Schutz (SPR, N4) zu realisieren, wenn das Schutzregister leer ist.

9. Elektronisches System, **dadurch gekennzeichnet, daß** es wenigstens einen Speicher nach einem der vorangehenden Ansprüche aufweist.

10. Elektronisches System mit wenigstens zwei Speichern nach einem der vorangehenden Ansprüche, **dadurch gekennzeichnet, daß** für jeden Speicher die schützbare Zone in ihrer Position im oberen oder unteren Teil des Speichers unabhängig von anderen Speichern bestimmt ist.
